# EUROPÄISCHE PATENTSCHRIFT

(11) **EP 2 082 830 B1**
(45) Veröffentlichungstag und Bekanntmachung des Hinweises auf die Patenterteilung: **17.02.2010**
(21) Anmeldenummer: 08021791.2
(22) Anmeldetag: 16.12.2008
(51) Int. Cl.: B23Q 1/62, B23Q 3/157, B23Q 7/04, B23Q 7/10

(54) **Werkzeugmaschine**
Machine tool
Machine-outil

(30) Priorität: 24.01.2008 DE 102008005937
(43) Veröffentlichungstag der Anmeldung: 29.07.2009
(73) Patentinhaber: Haas Schleifmaschinen GmbH, 78647 Trossingen (DE)
(72) Erfinder: Wember, Dirk, 78628 Rottweil (DE)
(74) Vertreter: Patentanwälte Westphal, Mussgnug & Partner

(56) Entgegenhaltungen:
- EP-A- 0 941 790
- DE-A1- 4 342 630
- DE-A1-102006 011 551
- GB-A- 2 112 365

## Beschreibung

Die Erfindung betrifft eine Werkzeugmaschine gemäß dem Oberbegriff des Patentanspruchs 1.

Werkzeugmaschinen dieser Gattung, bei welchen die Werkzeugspindel rotierend antreibbar ist, werden insbesondere als Schleifmaschinen und/oder Fräsmaschinen eingesetzt. Bei diesen Werkzeugmaschinen werden das rotierende Werkzeug, insbesondere das Schleif- oder Fräswerkzeug und das zu bearbeitende Werkstück in der sogenannten X-Achse relativ gegeneinander bewegt, wobei ggf. das Werkstück um eine zur X-Achse parallele A-Achse gedreht und positioniert werden kann. Die Werkzeugspindel wird in zu der X-Achse und zueinander senkrechten Y- und Z-Achsen linear verfahren, um Zustell- und Bearbeitungsbewegungen zu steuern. Weiter ist die Arbeitsspindel zumindest um eine zur Z-Achse parallele C-Achse schwenkbar, um den Anstellwinkel des Werkzeuges zur X-Achse des zu bearbeitenden Werkstückes einzustellen.

Eine solche Werkzeugmaschine ist z.B. aus der DE 10 2006 011 551 A1 bekannt.

Aus der DE 197 08 096 A1 ist weiter eine Werkzeugmaschine bekannt, bei welcher die Werkzeugspindel in den drei zueinander senkrechten linearen X-, Y- und Z-Achsen verfahrbar ist. Ein um eine Drehachse rotierend positionierbares Magazinrad weist an seinem Umfang Aufnahmen für Werkzeuge auf. Die Werkzeugspindel kann an das Magazinrad gefahren werden, um Werkzeuge zwischen den Aufnahmen des Magazinrades und der Werkzeugspindel zu wechseln. An dem Magazinrad können weiter gemeinsam mit dem Magazinrad um dieselbe Drehachse drehbar Werkstückhalter angeordnet sein, wobei die in den Werkstückhaltern gespannten Werkstücke mittels der Drehachse positioniert und in diesen Werkstückhaltern gespannt durch die in der Werkzeugspindel gespannten Werkzeuge bearbeitet werden können.

Der Erfindung liegt die Aufgabe zugrunde, eine Werkzeugmaschine der eingangs genannten Gattung so weiterzubilden, dass eine höhere Flexibilität bezüglich der einzusetzenden Werkzeuge und der zu bearbeitenden Werkstücke erreicht wird.

Diese Aufgabe wird erfindungsgemäß gelöst durch eine Werkzeugmaschine mit den Merkmalen des Patentanspruchs 1.

Vorteilhafte Ausführungen und Weiterbildungen der Erfindung sind in den Unteransprüchen angegeben.

Bei der erfindungsgemäßen Werkzeugmaschine ist das Magazin mit zumindest einem Magazinrad ausgebildet, welches um eine Drehachse rotierend positionierbar ist. Das Magazinrad weist Aufnahmen auf, die in Umfangsrichtung verteilt an dem Magazinrad angeordnet sind. Dabei können Aufnahmen für Werkzeuge und Aufnahmen für Werkstücke vorgesehen sein. Je nach den individuellen Bedürfnisse des Einsatzes können dabei nur Aufnahmen für Werkzeuge, nur Aufnahmen für Werkstücke oder sowohl Aufnahmen für Werkzeuge als auch Aufnahmen für Werkstücke vorgesehen sein. Der Werkzeugspindel ist ein Werkstückgreifer zugeordnet, der gemeinsam mit der Werkzeugspindel bewegbar ist, so dass Antrieb und Steuerung der Bewegung der Werkzeugspindel gleichzeitig auch zur Bewegung des Werkstückgreifers verwendet werden. Die Werkzeugspindel kann gesteuert an das Magazinrad verfahren werden, um ein Werkzeug zwischen einer Aufnahme des Magazinrades und der Werkzeugspindel zu wechseln. Dadurch ist es möglich, unterschiedliche Werkzeuge für aufeinanderfolgende unterschiedliche Bearbeitungen zu wechseln oder auch Werkzeuge bei Verschleiß gegen neue Werkzeuge auszutauschen. Weiter können auch die zu bearbeitenden Werkstücke in dem Magazin bereitgestellt werden. Der Werkstückgreifer kann durch dieselben gesteuert angetriebenen Bewegungen an eine Aufnahme des Magazinrades, in welcher ein Werkstück aufgenommen ist, gefahren werden, um das Werkstück aus der Aufnahme zu entnehmen. Durch die gesteuerte Bewegung in den linearen Achsen kann das in dem Werkstückgreifer gehaltene Werkstück an die Werkstück-Spanneinrichtung transportiert und in diese eingesetzt werden. Umgekehrt kann ein in der Werkstück-Spanneinrichtung gespanntes Werkstück durch den Werkstückgreifer entnommen und in das Magazin übergeben werden. Dadurch können auch in dem Magazin bevorratete Werkstücke zur Bearbeitung zugeführt werden, so dass eine größere Anzahl gleicher Werkstücke oder auch unterschiedlicher Werkstücke aufeinanderfolgend bearbeitet werden können.

Die Werkzeugmaschine ermöglicht somit einen automatischen Wechsel der Werkzeuge und/oder der Werkstücke. Es können daher mit einer hohen Flexibilität sowohl verschiedene Bearbeitungsvorgänge an gleichartigen Werkstücken oder auch gleiche oder unterschiedliche Bearbeitungsvorgänge an verschiedenen Werkstücken aufeinanderfolgend durchgeführt werden. Die Werkzeugmaschine eignet sich aufgrund dieser Flexibilität insbesondere für die variable Bearbeitung kleiner Stückzahlen.

Da für den Werkzeugwechsel, den Werkstückwechsel, die Zustellbewegung und den Bearbeitungsvorschub dieselben gesteuerten Achsen verwendet werden, zeichnet sich die Werkzeugmaschine insbesondere auch durch ihre kostengünstige und platzsparende Konstruktion aus.

In einer vorteilhaften Ausführung ist die Werkzeugspindel in der Y-Achse und der Z-Achse bewegbar, während die Bewegung in der X-Achse durch die Werkstück-Spanneinrichtung erfolgt. Dadurch ist eine symmetrische Lagerung der Werkzeugspindel im Maschinengestell möglich, die insbesondere minimale thermische Toleranzen ermöglicht. Zweckmäßigerweise ist dabei die Werkzeugspindel mit vertikaler Z-Achse oberhalb der auf dem Maschinenbett in der X-Achse verfahrbaren Werkstück-Spanneinrichtung angeordnet.

Das Magazinrad ist dabei um eine zur Z-Achse parallele, d.h. ebenfalls vertikale Drehachse rotierend angeordnet. Die Werkzeugspindel kann radial von außen gegen das Magazinrad gefahren werden, um einen Werkzeugwechsel oder einen Werkstückwechsel durchzuführen. Ebenso ist es möglich, die Werkzeugspindel von oben in das Innere des Magazinrades eintauchend zu bewegen, um insbesondere Werkzeuge zu wechseln, die mit radial ins Innere des Magazinrades gerichtetem Werkzeugschaft in den Aufnahmen liegen.

Das Magazinrad kann eine Segmentfreisparung aufweisen. Im Bereich dieser Segmentfreisparung sind dabei keine Aufnahmen am Umfang des Magazinrades vorgesehen. Für einen Werkzeug- oder Werkstückwechsel wird das Magazinrad in seiner Drehstellung so positioniert, dass die jeweilige Aufnahme der Werkzeugspindel und dem Arbeitsraum zugewandt ist. Während des Bearbeitungsvorgangs wird das Magazinrad so in seine Drehstellung positioniert, dass die Segmentfreisparung dem Arbeitsraum zugewandt ist und dieser somit in das Magazinrad eingreifen kann. Dadurch ist es möglich, die Drehachse des Magazinrades nahe am Arbeitsraum anzuordnen, wodurch sich eine platzsparende Ausbildung der Werkzeugmaschine insbesondere bezüglich der Aufstellgrundfläche ergibt.

Die Aufnahmen für die Werkzeuge sind vorzugsweise U-förmig ausgebildet, so dass die Werkzeuge in diese Aufnahmen von oben eingelegt bzw. nach oben entnommen werden können und allein durch ihr Gewicht in den Aufnahmen gehalten werden. Die gleichen Aufnahmen können ggf. auch für die Werkstücke verwendet werden, wenn diese Werkstücke mit entsprechenden Werkstückträgern versehen sind, die den Aufnahmen angepasst sind.

Für axial langgestreckte Werkstücke kann das Magazinrad mit einem Teller versehen sein, in welchen die Werkstücke in radialer Anordnung eingelegt werden. Ein solcher Teller kann fest am Magazinrad montiert sein und dieses vollständig oder sektoriell ausfüllen. Ebenso ist es möglich, einen solchen Teller als separates Bauteil auszubilden, welches bei Bedarf wahlweise auf das Magazinrad aufgesetzt werden kann.

Das Magazin kann ein Magazinrad aufweisen oder mit zwei koaxial ineinander eingesetzten Magazinrädern ausgebildet sein, wobei diese zwei Magazinräder unabhängig voneinander um dieselbe geometrische Drehachse in ihrer Drehstellung positioniert werden können.

Bei einer konstruktiv einfachen Ausführung, die insbesondere auch eine einfache Bewegungssteuerung ermöglicht, sind der Werkstückgreifer und die Werkzeugspindel an einer gemeinsamen Trägerplatte angeordnet. Diese Trägerplatte ist vorzugsweise mittels eines Z-Schlittens in der Z-Achse verfahrbar, wobei dieser Z-Schlitten wiederum in der Y-Achse verfahrbar gelagert ist. Die Trägerplatte ist um die C-Achse drehbar.

Eine besonders einfache Steuerung ergibt sich, wenn der Werkstückgreifer axial fluchtend mit der Werkzeugspindel angeordnet ist. Die Positionen des Werkstückgreifers und der Werkzeugspindel unterscheiden sich dadurch nur in der Achsrichtung der Werkzeugspindel. Ist der Werkstückgreifer dabei axial vor der Werkzeugspindel angeordnet, so ist der Werkstückgreifer vorzugsweise wegschwenkbar, damit die Werkzeugspindel für die Aufnahme eines Werkzeugs zur Bearbeitung bzw. zum Werkzeugwechsel frei ist.

Im Folgenden wird die Erfindung anhand eines in der Zeichnung dargestellten Ausführungsbeispiels näher erläutert. Es zeigen
- Figur 1: eine Ansicht der Werkzeugmaschine,
- Figur 2: eine entsprechende Ansicht der Werkzeugmaschine, wo- bei die Werkzeugspindel und die sie tragenden Teile weggelassen sind und das Magazin sich in der Ruhepo- sition befindet,
- Figur 3: eine Figur 2 entsprechende Darstellung, wobei sich das Magazinrad in der Wechselposition befindet,
- Figur 4: eine Detaildarstellung des Magazinrades und der Werk- zeugspindel,
- Figur 5: eine Seitenansicht des Magazinrades und der Werkzeug- spindel vor dem Werkzeugwechsel,
- Figur 6: eine Figur 5 entsprechende Darstellung beim Werkzeug- wechsel,
- Figur 7: eine perspektivische Darstellung des Magazinrades und der Werkzeugspindel im Verlauf des Werkzeugwechsels,
- Figur 8: eine perspektivische Ansicht der Werkzeugmaschine beim Wechsel eines Werkstückes an der Werkstückspin- del,
- Figur 9: eine Seitenansicht des Magazinrades beim Wechsel ei- nes Werkstückes,
- Figur 10: eine perspektivische Ansicht eines Magazins mit einem äußeren und einem inneren Magazinrad,
- Figur 11: eine Draufsicht auf das Magazin der Figur 10 und
- Figur 12: eine perspektivische Ansicht einer weiteren Ausfüh- rung des Magazins zur Aufnahme von langgestreckten Werkstücken.

In der dargestellten Ausführung ist die Werkzeugmaschine insbesondere als Schleifmaschine dargestellt, bei welcher die Werkzeugspindel mit Schleifwerkzeugen bestückt wird. Es ist ohne Weiteres ersichtlich und aus der folgenden Beschreibung erkennbar, dass bei der Werkzeugmaschine auch andere Werkzeuge, insbesondere Fräswerkzeuge und ggf. Bohrwerkzeuge eingesetzt werden können.

Die Werkzeugmaschine weist ein Maschinengestell mit einem horizontalen Maschinenbett 10 auf, auf welchem horizontal in der X-Achse linear verfahrbar eine Werkstückspindel 12 gelagert ist. Die Werkstückspindel 12 ist horizontal in der X-Achse angeordnet und über einen Werkstückspindelantrieb 14 rotierend antreibbar. An der Werkstückspindel 12 kann ein Werkstück 16 gespannt werden, das ggf. durch einen Reitstock 18 abgestützt wird. An beiden Seiten des Maschinenbettes 10 ist jeweils eine vertikal nach oben gerichtete Seitenwange 20 des Maschinengestells ausgebildet. Auf den horizontalen in der Y-Achse verlaufenden Oberseiten der Seitenwangen 20 ist jeweils eine Y-Führung 22 angeordnet. Auf diesen Y-Führungen 22 ist eine Brücke 24 gelagert, die in der Y-Achse gesteuert angetrieben linear verfahrbar ist und den Arbeitsraum der Werkzeugmaschine zwischen den Seitenwangen 20 überspannt. Zentrisch in der Brücke 24 ist ein Z-Schlitten 26 gelagert, der gesteuert antreibbar in der vertikalen Z-Achse linear verfahr und gesteuert antreibbar um seine vertikale Achse (C-Achse) drehbar ist.

Insoweit entspricht der Aufbau der Werkzeugmaschine der in der DE 10 2006 011 551 A1 beschriebenen Werkzeugmaschine. Auf die dortige Beschreibung wird Bezug genommen.

Am unteren Ende des Z-Schlittens 26 ist eine Trägerplatte 28 angeordnet. An dieser Trägerplatte 28 ist eine drehantreibbare Werkzeugspindel 30 gelagert. Die Werkzeugspindel 30 ist mit horizontaler Achse an der Trägerplatte 28 angeordnet. Die Werkzeugspindel 30 kann ein Werkzeug aufnehmen und spannen, wozu die Werkzeugspindel 30 beispielsweise mit einer Kegelschaft-Aufnahme ausgebildet ist. Die Anordnung der Werkzeugspindel 30 an der Trägerplatte 28 ist so gewählt, dass ein an der Werkzeugspindel 30 gespanntes Werkzeug in der C-Achse liegt, um welche die Werkzeugspindel 30 geschwenkt werden kann. Ggf. kann die Werkzeugspindel 30 an der Trägerplatte 28 auch linear verfahrbar angeordnet sein, wobei die lineare Verfahrbewegung in der Achse der Werkzeugspindel 30 verläuft. Ebenso ist es möglich, die Werkzeugspindel 30 auch in der Weise schwenkbar an der Trägerplatte 28 zu lagern, dass die Achse der Werkzeugspindel 30 aus der horizontalen Stellung verschwenkt werden kann und einen Neigungswinkel gegenüber der Ebene der Trägerplatte 28 einnimmt.

Durch die Bewegung des Werkstückes 16 in der X-Achse, die Bewegung der Brücke 24 in der Y-Achse und die Bewegung des Z-Schlittens 26 in der Z-Achse können die drei linearen Hauptachsen für die Bearbeitung des Werkstückes 16 realisiert werden. Durch das Verschwenken der Werkzeugspindel 30 um die C-Achse und ggf. durch ein Verstellen des Neigungswinkels der Werkzeugspindel 30 gegenüber der Trägerplatte 28 kann der Anstellwinkel des Werkzeuges, z.B. einer Schleifscheibe, gegenüber dem zu bearbeitenden Werkstück 16 gesteuert eingestellt werden.

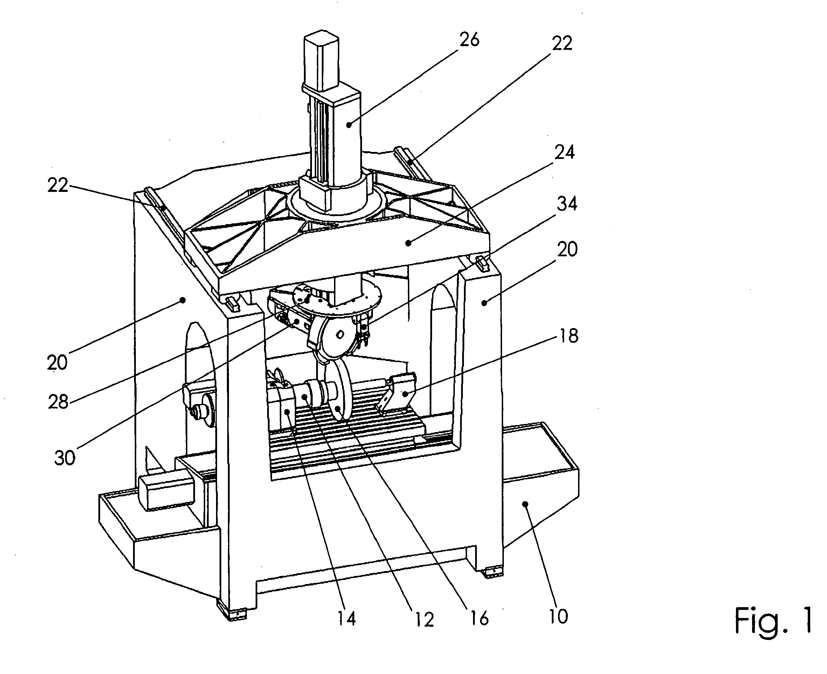

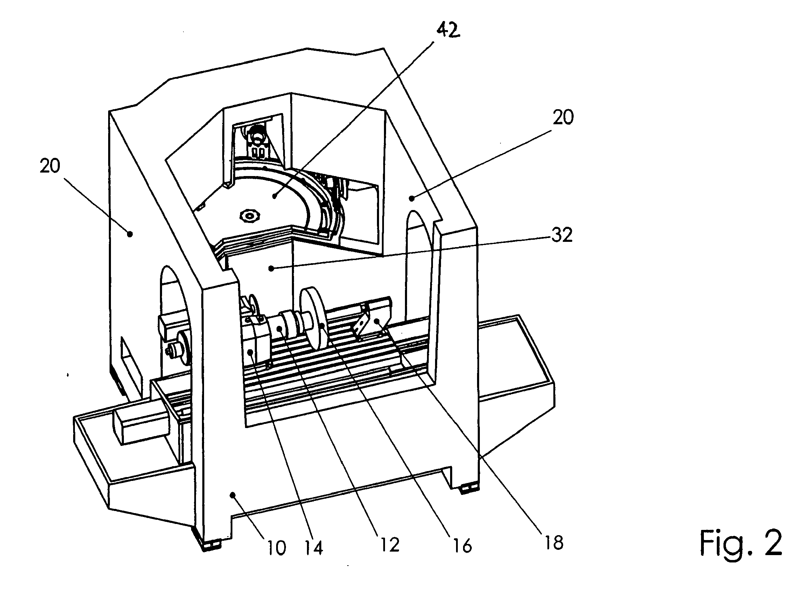

In der Darstellung der Figur 1 befindet sich die Werkzeugspindel 30 in der Arbeitsposition, in welcher ein an der Werkzeugspindel 30 gespanntes Werkzeug, z.B. eine Schleifscheibe, das Werkstück 16 bearbeitet. In Figur 2 sind zur besseren Erkennbarkeit die Brücke 24 und der Z-Schlitten 26 mit der Werkzeugspindel 30 weggelassen. Es ist zu erkennen, dass der Arbeitsraum auf der von der Bedienerseite (in der Zeichnung die Vorderseite) abgewandten Rückseite nach hinten ausgewölbt ist, z.B. in Form eines Polygons, um die Schwenkbewegung der horizontalen Werkzeugspindel 30 um die vertikale C-Achse zu ermöglichen. Die Rückseite des Arbeitsraumes ist durch wegbewegbare Trennwände 32 abgeschlossen. Hinter diesen Trennwänden 32 befindet sich ein später beschriebenes Magazin.

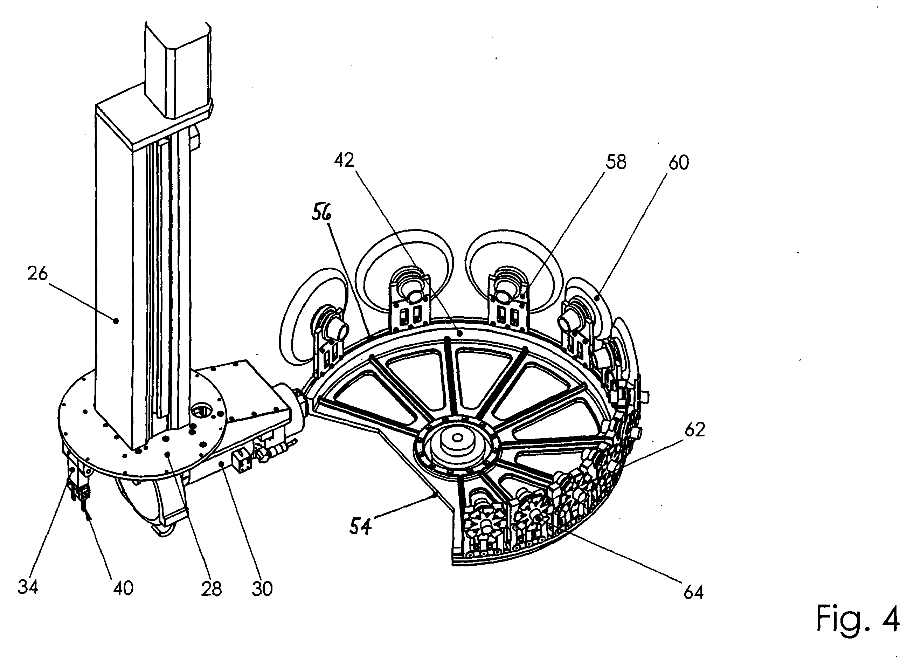

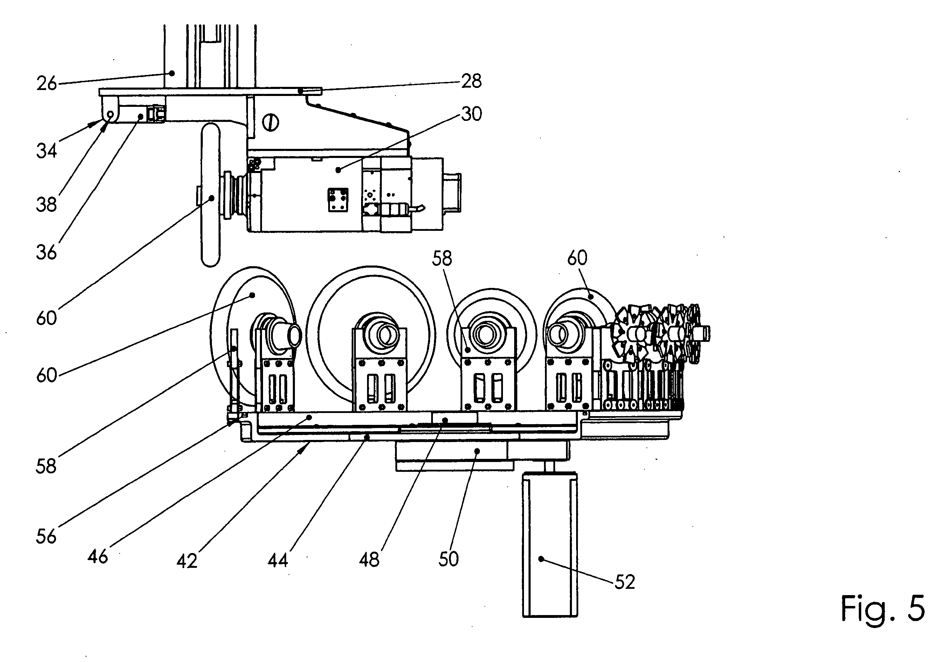

Wie insbesondere in den Figuren 4 und 5 zu sehen ist, ist an der Unterseite der Trägerplatte 28 außer der Werkzeugspindel 30 noch ein Werkstückgreifer 34 angebracht. Der Werkstückgreifer 34 ist somit gemeinsam mit der Werkzeugspindel 30 durch denselben Antrieb gesteuert in der Y-Achse und der Z-Achse linear verfahrbar und um die C-Achse verschwenkbar. Der Werkstückgreifer 34 ist an der Trägerplatte 28 bezüglich der C-Rotationsachse diametral zu der Werkzeugspindel 30 angeordnet. Der Werkstückgreifer 34 weist einen Arm 36 auf, der mit einem Gelenk 38 schwenkbar an der Trägerplatte 28 angeordnet ist. Am freien Ende des Armes 36 sind zangenartig ausgebildete Greiferfinger 40 angeordnet. Der Werkstückgreifer 34 kann um das Gelenk 38 nach oben geschwenkt werden, so dass der Arm 36 mit den Greiferfingern 40 an der Unterseite der Trägerplatte 28 anliegt. In dieser Ruhestellung ist der Werkstückgreifer 34 außer Funktion und gibt den Raum vor der Werkzeugspindel 30 frei, so dass ein Werkzeug in die Werkzeugspindel 30 eingesetzt werden kann und mit diesem Werkzeug eine Bearbeitung des Werkstückes 16 möglich ist. Wird der Werkstückgreifer 34 aus dieser Ruheposition nach unten geschwenkt, so ragt der Arm 36 von der Trägerplatte 28 senkrecht nach unten und die Greiferfinger 40 befinden sich axial fluchtend vor der Spannaufnahme der Werkzeugspindel 30.

Das hinter den Trennwänden 32 angeordnete Magazin weist in einer einfachen Ausführung ein Magazinrad 42 auf, welches um eine vertikale, zur Z-Achse parallele Achse gesteuert drehbar angetrieben wird und in seiner Drehstellung positionierbar ist. Das Magazinrad 42 besteht aus einer in der horizontalen Ebene liegenden kreisförmigen Magazinscheibe 44, an deren Außenumfang ein vertikal nach oben weisender Magazinring 46 angeordnet ist. Die Magazinscheibe 44 kann als geschlossene Scheibe ausgebildet sein, ist vorzugsweise jedoch als Speichenscheibe ausgebildet. Die Magazinscheibe 44 sitzt zentrisch auf einer vertikalen Antriebswelle 48, die unterhalb der Magazinscheibe 44 über einen Zahnriemen 50 von einem NCgesteuerten Motor 52 antreibbar ist.

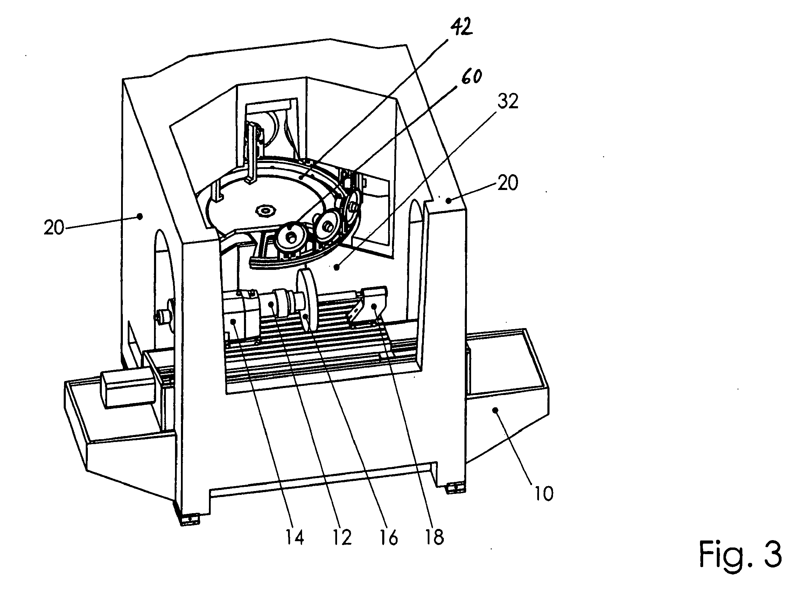

Die Magazinscheibe 44 und damit das gesamte Magazinrad 42 ist in einem Winkelbereich mit einer Segmentfreisparung 54 ausgebildet. Die Form dieser Segmentfreisparung 54 entspricht in ihrem Verlauf dem polygonalen Verlauf der Trennwände 32. Ist das Magazinrad 42 in seiner Drehstellung so positioniert, dass die Segmentfreisparung 54 dem Arbeitsraum zugewandt ist, so können die Trennwände 32 innerhalb dieser Segmentfreisparung 54 in die Schließstellung bewegt werden. Sind die Trennwände 32 in ihre Offenstellung zurückgefahren, so kann das Magazinrad 42 um seine vertikale Achse gedreht werden und greift mit seinem Umfang in den Arbeitsraum der Werkzeugmaschine hinein. Diese beiden Stellungen sind in den Figuren 2 bzw. 3 gezeigt. Die Ausbildung des Magazinrades 42 mit der Segmentfreisparung 54 ermöglicht es, die Antriebswelle 48 baulich nahe dem nach hinten ausgewölbten Arbeitsraum anzuordnen, so dass die Grundfläche der Werkzeugmaschine durch das Magazin wenig vergrößert wird.

In den oberen Rand des Magazinringes 46 ist eine in diesem Magazinring 46 koaxial umlaufende T-Nut 56 eingearbeitet. In diese T-Nut 56 sind Aufnahmen 50 eingesetzt, die mit einem Fuß in die T-Nut 56 eingreifen. Mit diesem Fuß können die Aufnahmen 58 in der T-Nut 56 in Umfangsrichtung des Magazinringes 46 verschoben und in der jeweils gewünschten Position geklemmt werden. Die Aufnahmen 58 ragen von dem Magazinring 46 vertikal nach oben und öffnen sich U-förmig nach oben. Die Aufnahmen 58 dienen zur Aufnahme von Werkzeugen oder Werkstücken. Die Aufnahmen 58 sind entsprechend den zu magazinierenden Werkzeugen bzw. Werkstücken ausgebildet. Beispielsweise sind Werkzeuge 60 in Form von Schleifscheiben dargestellt, die einen genormten Kegelschaft für eine Hohlschaftkegel-Werkzeugspannung in der Werkstückspindel 12 aufweisen. Die Aufnahmen 58 sind in diesem Falle so ausgebildet, dass das Werkzeug 60 von oben in die Aufnahme 58 eingelegt werden kann, wobei die Aufnahme 58 in die Greifrille des Kegelschaftes eingreift. Das Werkzeug 60 wird in der Aufnahme 58 ohne zusätzliche Befestigung und Verriegelung durch sein Eigengewicht sicher gegen Zentrifugalkräfte und Kippmomente gehalten. Die Werkzeuge 60 werden in die Aufnahmen 58 so eingesetzt, dass ihre Kegelschäfte von dem Magazinring 46 radial nach innen gerichtet sind, während das eigentliche Werkzeug radial nach außen gerichtet ist. Da der Durchmesser des eigentlichen Werkzeugs in der Regel größer ist als der Durchmesser des Kegelschaftes, ergibt sich hierdurch eine optimale Platzausnützung des Magazinumfanges. Die Aufnahmen 58 können in der T-Nut 56 in Umfangsrichtung des Magazinringes 46 so verschoben und im gegenseitigen Winkelabstand angeordnet werden, dass entsprechend dem Durchmesser der jeweiligen Werkzeuge 60 eine optimale Ausnützung des Umfanges des Magazinrades 42 erreicht wird.

Alternativ zu den Werkzeugen 60 können in dem Magazinrad 42 auch zu bearbeitende Werkstücke bevorratet werden, die nacheinander bearbeitet werden sollen. Die magazinierten Werkstücke werden ebenfalls in Aufnahmen des Magazinrades 42 gehalten und bereitgestellt. Die Aufnahmen sind dabei in ihrer Form und Ausbildung den jeweils zu magazinierenden Werkstücken in der Weise angepasst, dass die Werkstücke in diese Aufnahme eingelegt, aus diesen Aufnahmen entnommen und in diesen Aufnahmen gehalten werden können. Je nach Bedarf des Einsatzes der Werkzeugmaschine können in dem Magazinrad 42 ausschließlich Aufnahmen für Werkzeuge, ausschließlich Aufnahmen für Werkstücke oder sowohl Aufnahmen für Werkzeuge als auch für Werkstücke angeordnet sein. Die Aufnahmen für Werkzeuge und/oder Werkstücke werden in der T-Nut 56 in Umfangsrichtung optimiert positioniert und geklemmt und fixiert. Die Positionen der Aufnahmen für die Werkzeuge und/oder Werkstücke werden als Winkelpositionswerte in der Steuerung des Motors 52 hinterlegt, so dass das Magazinrad 42 jeweils entsprechend einer Anforderung in der entsprechenden Winkelstellung positioniert werden kann.

In einem speziellen Ausführungsbeispiel können die Aufnahmen für die Werkstücke mit den Aufnahmen 58 für die Werkzeuge 60 übereinstimmen, wie dies die Figuren 4 bis 7 zeigen. In diesem Falle sind die zu bearbeitenden Werkstücke Schneidplatten 62, die an einem Werkstückträger 64 befestigt sind. Der Werkstückträger 64 hat dabei die Form eines genormten Kegelschaftes, der dem Kegelschaft der Werkzeuge 60 entspricht. Die Werkstückträger mit den Schneidplatten 62 können auf diese Weise in gleiche Aufnahmen 58 eingesetzt werden, wie sie für die Aufnahme der Werkzeuge 60 verwendet werden.

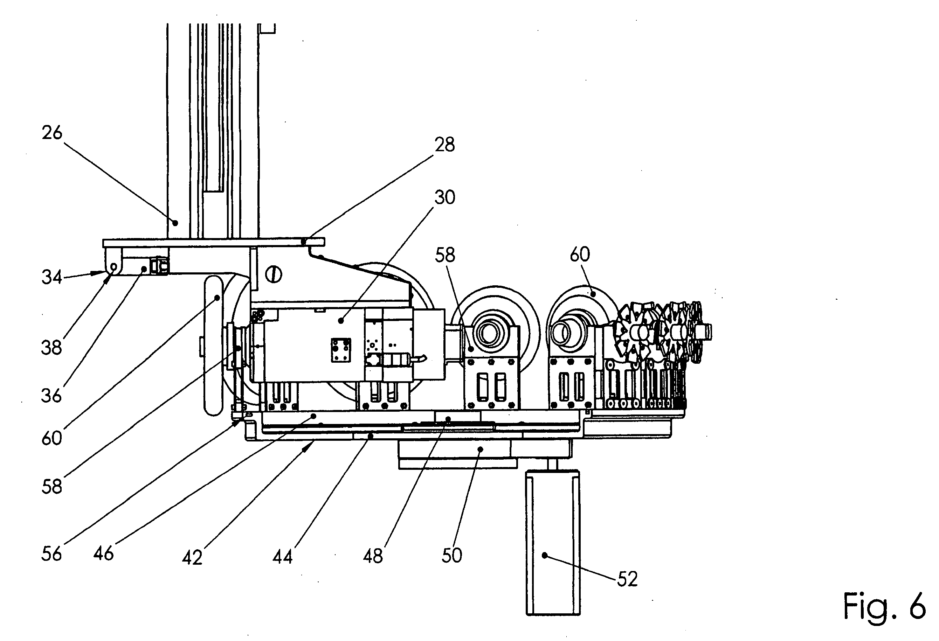

Während der Bearbeitung eines Werkstückes 16 durch ein Werkzeug 60 befindet sich die Werkzeugmaschine in der in Figur 2 gezeigten Stellung, in welcher die Segmentfreisparung 54 des Magazinrades 42 mit der Lage der Trennwände 32 übereinstimmt und diese geschlossen sind. Das Magazinrad 42 ist durch die Trennwände 32 von dem Arbeitsraum abgeschirmt. Dies entspricht der Darstellung der Figur 4, in welcher nur der Z-Schlitten und das Magazinrad dargestellt sind. Um einen Werkzeugwechsel durchzuführen, werden die Trennwände 32 weggefahren, so dass das Magazinrad 42 in den Arbeitsraum hingedreht werden kann. Das Magazinrad 42 wird gesteuert so gedreht und positioniert, dass eine freie Aufnahme 58 in eine Wechselposition in dem Arbeitsraum gebracht wird. Die Werkzeugspindel 30 wird mittels des Z-Schlittens 26 hochgefahren und mittels der Brücke 24 in der Y-Achse über das Magazinrad 42 bewegt. Diese Position ist in Figur 5 gezeigt. Dann wird der Z-Schlitten 26 nach unten gefahren, so dass das an der Werkzeugspindel 30 gespannte Werkzeug 60 in die freie Aufnahme 58 eingelegt wird (Fig. 6).

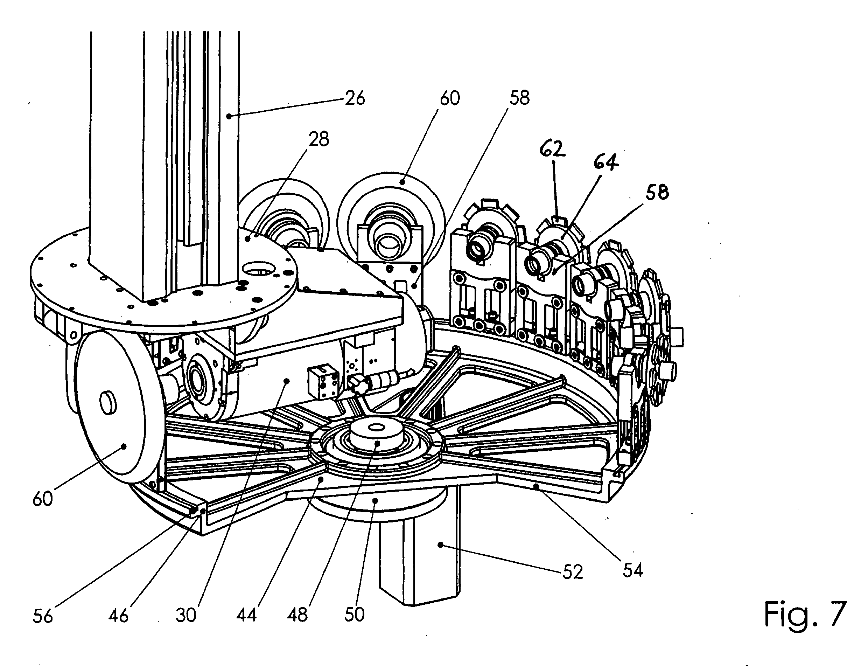

Nach Lösen der Spanneinrichtung der Werkzeugspindel 30 wird diese in der Y-Achse von dem Werkzeug 60 radial bezüglich des Magazinrades 42 nach innen bewegt, so dass das nun in der Aufnahme 58 liegende Werkzeug 60 von der Werkzeugspindel 30 freikommt (Fig. 7). Das Magazinrad 42 kann nun gesteuert gedreht werden, bis ein neues einzuwechselndes Werkzeug 60 vor der Werkzeugspindel 30 positioniert ist. Nun wird in umgekehrter Reihenfolge die Werkzeugspindel 30 wieder bezüglich des Magazinrades 42 radial nach außen bewegt, so dass sich die Spanneinrichtung der Werkzeugspindel 30 über den Kegelschaft des nun aufzunehmenden Werkzeuges 60 geschoben wird und dieses Werkzeug 60 gespannt werden kann. Anschließend wird der Z-Schlitten 26 wieder nach oben gefahren, so dass das nun gespannte Werkzeug 60 aus der Aufnahme 58 herausgehoben wird. Die Werkzeugspindel 30 wird dann mittels der Brücke 24 in der X-Achse wieder in den Arbeitsraum verfahren. Das Magazinrad 42 wird dann so gedreht, dass die Segmentfreisparung 54 wieder dem Arbeitsraum zugewandt ist und die Trennwände 32 geschlossen werden können. Die Werkzeugmaschine ist nun zur Bearbeitung eines Werkstückes mit dem nun eingewechselten Werkzeug 60 bereit.

Während der Bearbeitung und während des gesamten Werkzeugwechselvorgangs befindet sich der Werkstückgreifer 34 in der nach oben geschwenkten und an der Trägerplatte 28 anliegenden Ruhestellung, die insbesondere die Figuren 5 und 6 deutlich zeigen.

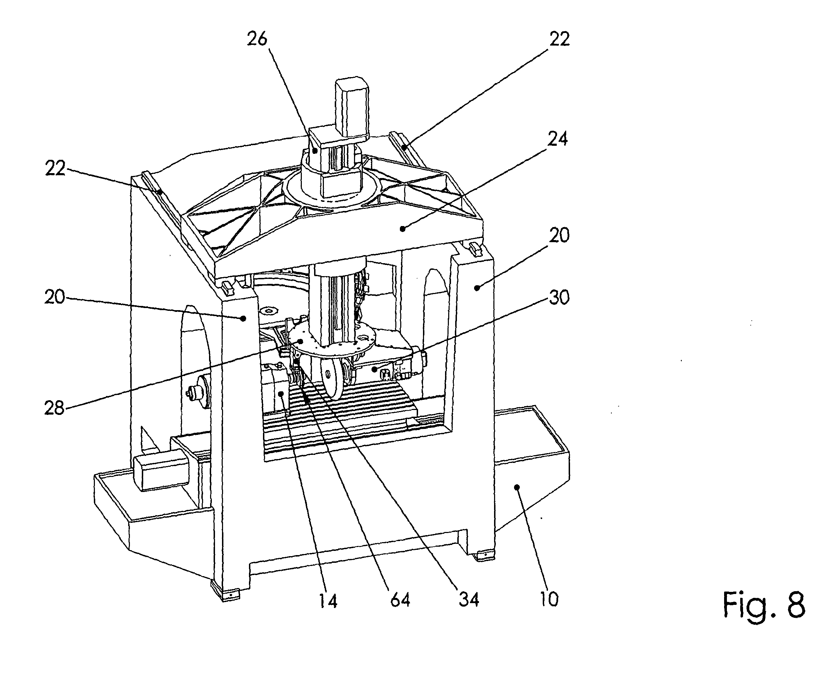

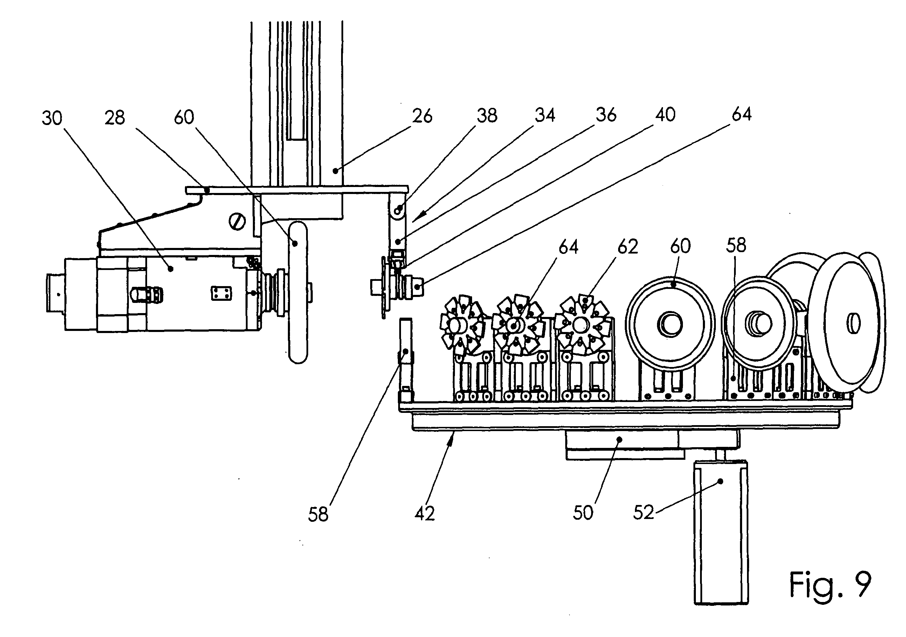

Soll ein zu bearbeitendes Werkstück ausgewechselt werden, so wird - vorzugsweise nach Ablegen des Werkzeuges im Magazin - der Werkstückgreifer 34 aus seiner Ruhestellung nach unten geschwenkt, wie dies z. B. Figur 9 zeigt. Der Werkstückgreifer 34 wird durch Verfahren der Brücke 24 in der Y-Achse und durch Verfahren der Werkstückspindel 12 in der Y-Achse über einem in der Werkstückspindel 12 gespannten Werkstückträger 64 positioniert (Fig. 8). Dann wird der Werkstückgreifer 34 mittels des Z-Schlittens 26 vertikal abgesenkt, so dass die Greiferfinger 40 den in der Werkstückspindel 12 gespannten Werkstückträger 64 greifen können. Wenn der Werkstückgreifer 34 den Werkstückträger 64 erfasst hat, wird die Spannung des Werkstücksträgers 64 an der Werkstückspindel 12 freigegeben und die Werkstückspindel 12 wird in der X-Achse zurückgefahren, so dass der Werkstückträger 64 von der Werkstückspindel 12 freikommt. Gleichzeitig werden die Trennwände 32 zurückgefahren und das Magazinrad 42 wird in den Arbeitsraum gedreht und so positioniert, dass eine freie Aufnahme 58 für das Werkstück sich in der Wechselposition befindet. Der Werkstückgreifer 34 mit dem Werkstückträger 64 wird in der Z-Achse und der Y-Achse über die freie Aufnahme 58 bewegt (Fig. 9), worauf durch Absenken des Z-Schlittens 26 der Werkstückträger 64 in die freie Aufnahme 58 eingelegt werden kann. Anschließend wird der Werkstückgreifer 34 wieder in der Z-Achse angehoben und ein einzuwechselnder Werkstückträger 64 durch Drehen des Magazinrades 42 unter dem Werkstückgreifer 34 positioniert. Nun wird der Werkstückgreifer 34 mittels des Z-Schlittens 26 abgesenkt, um den neuen Werkstückträger zu fassen. Anschließend wird der einzuwechselnde Werkstückträger durch Verfahren des Werkstückgreifers 34 in der Z-Achse und der Y-Achse und durch Schwenken um die C-Achse axial vor der Werkstückspindel 12 positioniert. Die Werkstückspindel 12 wird dann in der X-Achse gegen den Werkstückträger bewegt, so dass dieser in die Spanneinrichtung der Werkstückspindel 12 eingesetzt werden kann.

Anschließend wird der Werkstückgreifer 34 wieder in seine Ruhestellung hochgeschwenkt, so dass ein Werkzeug 60 an der Werkzeugspindel 30 gespannt werden kann bzw. ein dort gespanntes Werkzeug unbehindert durch den Werkstückgreifer 34 zur Bearbeitung eingesetzt werden kann.

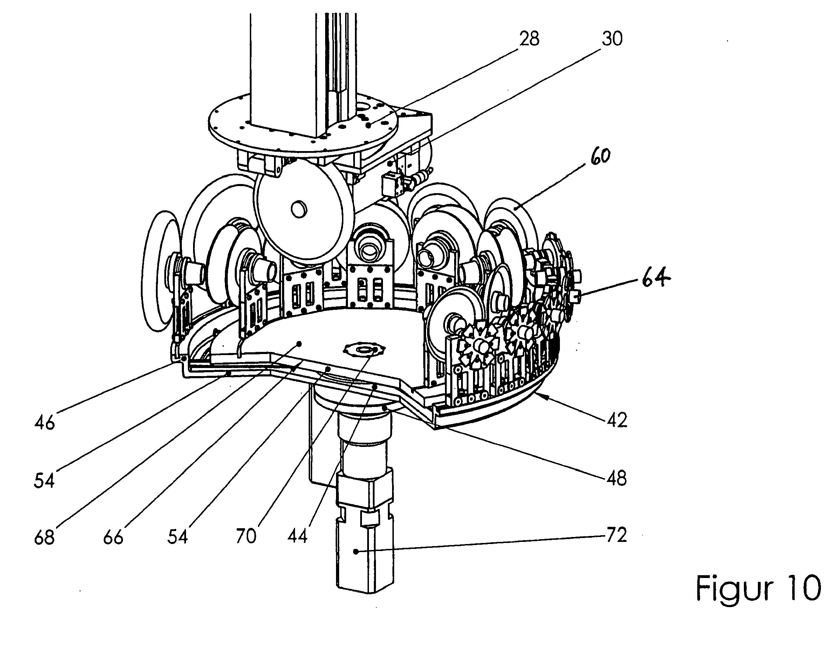

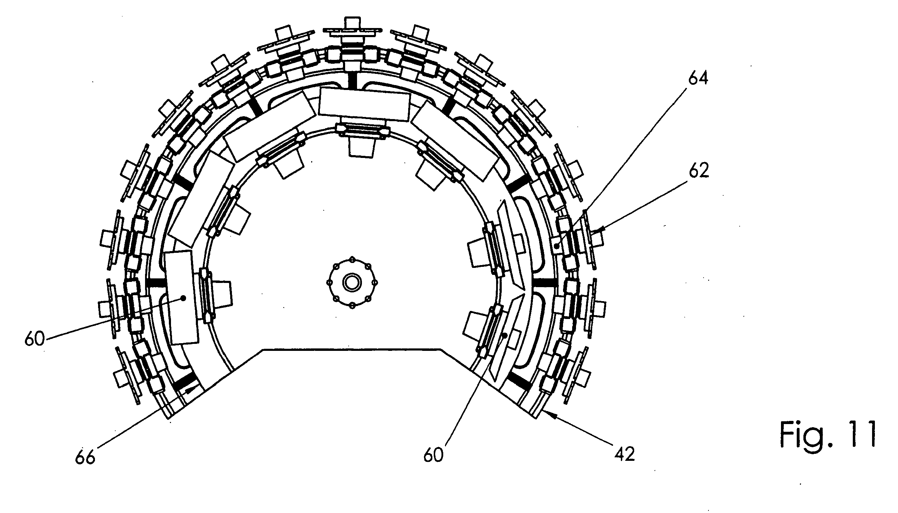

In den Figuren 4 bis 7 ist das Magazin mit nur einem Magazinrad 42 gezeigt. In einer weiteren Ausführung, die in den Figuren 10 und 11 dargestellt ist, weist das Magazin zusätzlich zu dem ersten äußeren Magazinrad 42 ein zweites inneres Magazinrad 66 auf.

Das innere Magazinrad 66 ist koaxial zu dem äußeren Magazinrad 42 angeordnet und weist eine Magazinscheibe 68 auf, die konzentrisch und parallel auf der Magazinscheibe 44 des äußeren Magazinrades 42 angeordnet ist. Der Außendurchmesser der Magazinscheibe 68 ist kleiner als der Innendurchmesser des Magazinringes 46 des äußeren Magazinrades 42. Das innere Magazinrad 66 ist frei und unabhängig von dem äußeren Magazinrad 42 drehbar. Hierzu weist die Magazinscheibe 68 des inneren Magazinrades 66 eine vertikale zentrische Antriebswelle 70 auf, die koaxial drehbar in der als Hohlwelle ausgebildeten Antriebswelle 48 des äußeren Magazinrades 42 gelagert ist. Das innere Magazinrad 66 ist über seine Antriebswelle 70 mittels eines unterhalb des äußeren Magazinrades 42 angeordneten NCsteuerbaren Motors 72 unabhängig von dem äußeren Magazinrad 42 antreibbar.

Das innere Magazinrad 66 ist im Wesentlichen in entsprechender Weise ausgebildet wie das äußeren Magazinrad 42. Auf der Oberseite der Magazinscheibe 68 läuft konzentrisch ein Magazinring, in welchem Aufnahmen in ihrer Winkelposition einstellbar angeordnet und geklemmt werden können. Der Magazinring und die Aufnahmen können in entsprechender Weise ausgebildet sein, wie dies vorstehend für das äußeren Magazinrad 42 beschrieben ist. Der Magazinring mit den Aufnahmen ist jedoch mit einem kleineren Radius ausgebildet, so dass zwischen dem Magazinring des inneren Magazinrades 66 und dem Magazinring 46 des äußeren Magazinrades 42 ein radialer Abstand frei bleibt, welcher für die Aufnahme der in dem inneren Magazinrad 66 bevorrateten Werkzeuge bzw. Werkstücke erforderlich ist.

Die Entnahme und Abgabe von Werkzeugen 60 bzw. Werkstücken 64 in das innere Magazinrad 66 erfolgt in gleicher Weise, wie dies für das äußeren Magazinrad 42 vorstehend beschrieben ist. Das innere Magazinrad 66 weist ebenfalls eine Segmentfreisparung 54 auf, die bei Winkelausrichtung des äußeren Magazinrades 42 und des inneren Magazinrades 66 mit der Segmentfreisparung 54 des äußeren Magazinrades 42 deckungsgleich ist. Insbesondere weist auch der Magazinring des inneren Magazinrades 66 einen entsprechenden Winkelausschnitt auf, damit die Werkzeuge 60 im äußeren Magazinrad 42 für die Werkzeugspindel 30 in der oben beschriebenen Weise durch diesen Ausschnitt im Magazinring des inneren Magazinrades 66 frei zugänglich sind.

Durch die unabhängige gesteuerte Einstellbarkeit der Drehpositionen des äußeren Magazinrades 42 und des inneren Magazinrades 66 können diese unabhängig voneinander in die Wechselposition gebracht werden und Werkzeuge 60 und/oder Werkstücke können in beliebig programmierbarer Weise in und aus dem äußeren Magazinrad 42 oder dem inneren Magazinrad 66 gewechselt werden. Das innere Magazinrad 66 erhöht somit die Zahl der Speicherplätze des Magazins für Werkzeuge und/oder Werkstücke, ohne die Außenabmessungen des Magazins zu vergrößern.

In dem Ausführungsbeispiel der Figur 10 sind beispielsweise in dem äußeren Magazinrad 42 teilweise Schneidplatten 62 auf Werkstückträgern 64 und teilweise Werkzeuge 60 magaziniert, während in dem inneren Magazinrad 66 Werkzeuge 60 in Form von Schleifscheiben magaziniert sind. In Figur 11 enthält das äußere Magazinrad 42 nur Werkstücke 62, 64 und das innere Magazinrad 66 nur Werkzeuge 60.

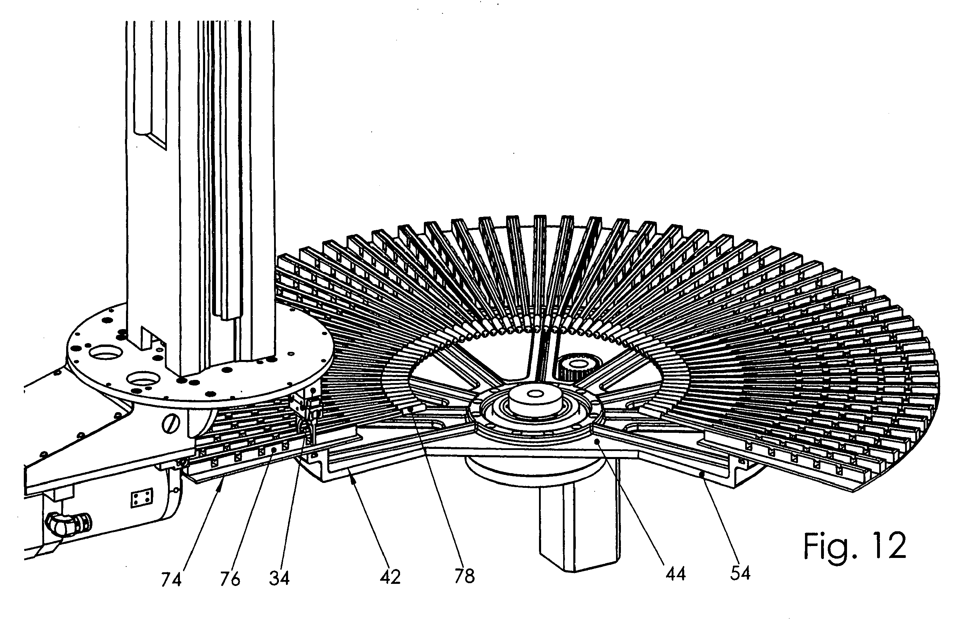

In Figur 12 ist eine weitere Ausbildung der Aufnahmen des Magazins gezeigt, die für axial langgestreckte Werkstücke geeignet ist, z.B. zur Magazinierung von zu schleifenden Bohrern.

In dieser Ausführung ist auf das Magazinrad 42 ein Teller 74 aufgesetzt, der mit dem Magazinrad 42 fest oder lösbar verbunden ist. Der Teller 74 kann sich in Umfangsrichtung über den gesamten Winkelbereich des Magazinrades 42 erstrecken, d.h. die Magazinscheibe 44 bis auf die Segmentfreisparung 54 bedecken, wie dies in der Zeichnung dargestellt ist. Ebenso kann sich der Teller 74 aber auch nur über einen begrenzten Winkelbereich erstrecken, so dass der übrige Winkelbereich des Magazinrades 42 für Aufnahmen 58 für Werkzeuge 60 frei bleibt. Auf der Oberseite des Tellers 74 sind radial verlaufende Rillen 76 ausgebildet als Aufnahmen, in welche die Werkstücke 78, z.B. zu schleifende Bohrer, eingelegt werden können.

Die Entnahmen und das Ablegen der Werkstücke 78 durch den Werkstückgreifer 34 und das Einwechseln der Werkstücke 78 in die Werkstückspindel 12 erfolgen in der vorstehend beschriebenen Weise.

### Bezugszeichenliste

- 10: Maschinenbett
- 12: Werkstückspindel
- 14: Werkstückspindelantrieb
- 16: Werkstück
- 18: Reitstock
- 20: Seitenwangen
- 22: Y-Führung
- 24: Brücke
- 26: Z-Schlitten
- 28: Trägerplatte
- 30: Werkzeugspindel
- 32: Trennwände
- 34: Werkstückgreifer
- 36: Arm
- 38: Gelenk
- 40: Greiferfinger
- 42: Magazinrad
- 44: Magazinscheibe
- 46: Magazinring
- 48: Antriebswelle
- 50: Zahnriemen
- 52: Motor
- 54: Segmentfreisparung
- 56: T-Nut
- 58: Aufnahmen
- 60: Werkzeuge
- 62: Schneidplatten
- 64: Werkstückträger
- 66: inneres Magazinrad
- 68: Magazinscheibe
- 70: Antriebswelle
- 72: Motor
- 74: Teller
- 76: Rillen
- 78: Werkstücke

## Patentansprüche

1. Werkzeugmaschine, mit einem Maschinengestell (10, 20), mit einer rotierend antreibbaren Werkzeugspindel (30), mit einer Werkstück-Spanneinrichtung (12) und mit einem Magazin, wobei die Werkzeugspindel (30) und die Werkstück-Spanneinrichtung (12) in einer linearen X-Achse relativ zueinander gesteuert verfahrbar sind und wobei die Werkzeugspindel (30) in Bezug auf das Maschinengestell (10, 20) in zur X-Achse und zueinander senkrechten linearen Y- und Z-Achsen gesteuert verfahrbar und um eine zur Z-Achse parallele C-Achse gesteuert schwenkbar ist,
**dadurch gekennzeichnet, dass** das Magazin zumindest ein Magazinrad (42, 66) aufweist, welches um eine zur Z-Achse parallele Drehachse rotierend positionierbar ist, dass das Magazinrad (42, 66) in Umfangsrichtung verteilt angeordnete Aufnahmen (58, 76) für Werkzeuge (60) und/oder Werkstücke (62, 64, 78) aufweist, dass der Werkzeugspindel (30) ein Werkstückgreifer (34) zugeordnet ist, der gemeinsam mit der Werkzeugspindel (30) bewegbar ist, und dass die Werkzeugspindel (30) mit dem Werkstückgreifer (34) in den Y-, Z- und C-Achsen an das Magazinrad (42, 66) verfahrbar und in Bezug auf die Aufnahmen (58, 76) ausrichtbar ist, so dass wahlweise ein Werkzeug (60) zwischen der Werkzeugspindel (30) und einer Aufnahme (58) des Magazinrades (42, 66) gewechselt werden kann oder ein Werkstück (62, 64, 78) zwischen dem Werkstückgreifer (34) und einer Aufnahme (58, 76) des Magazinrades (42, 66) gewechselt werden kann, wobei eine Übergabe des Werkstückes (16, 62, 64, 78) zwischen dem Werkstückgreifer (34) und der Werkstück-Spanneinrichtung (12) durch die Bewegungen in den X-, Y- , Z- und C-Achsen erfolgt.

2. Werkzeugmaschine nach Anspruch 1,
**dadurch gekennzeichnet, dass** die Z-Achse vertikal angeordnet ist und das wenigstens eine Magazinrad (42, 66) um eine vertikale Drehachse rotiert.

3. Werkzeugmaschine nach Anspruch 2,
**dadurch gekennzeichnet, dass** das wenigstens eine Magazinrad (42, 66) eine Segmentfreisparung (54) aufweist, die während des Bearbeitungsvorgangs dem Arbeitsraum der Werkzeugmaschine zugeordnet ist.

4. Werkzeugmaschine nach einem der Ansprüche 1 bis 3,
**dadurch gekennzeichnet, dass** das Magazin ein äußeres Magazinrad (42) und ein koaxial in diesem angeordnetes inneres Magazinrad (66) aufweist, wobei die Magazinräder (42 und 66) unabhängig voneinander gesteuert rotierend positionierbar sind.

5. Werkzeugmaschine nach einem der vorgehenden Ansprüche,
**dadurch gekennzeichnet, dass** die Werkzeuge (60) in dem wenigstens einen Magazinrad (42, 66) mit bezüglich des Magazinrades (42, 66) radial nach innen gerichtetem Werkzeugschaft aufgenommen sind und dass die Werkzeugspindel (30) in das Innere des wenigstens einen Magazinrades (42, 66) eintaucht und im Inneren des Magazinrades (42, 66) radial gegen die Aufnahmen (58) für einen Werkzeugwechsel bewegbar ist.

6. Werkzeugmaschine nach einem der vorgehenden Ansprüche,
**dadurch gekennzeichnet, dass** die Werkzeugspindel in der Y- und der Z-Achse verfahrbar ist und die Werkstück-Spanneinrichtung (12) in der X-Achse verfahrbar ist.

7. Werkzeugmaschine nach einem der vorhergehenden Ansprüche,
**dadurch gekennzeichnet, dass** die Werkzeugspindel (30) und der Werkstückgreifer (34) an einer gemeinsamen Trägerplatte (28) gelagert sind.

8. Werkzeugmaschine nach Anspruch 7,
**dadurch gekennzeichnet, dass** die Trägerplatte (28) an einem in der Z-Achse verfahrbaren und um die C-Achse drehbaren Z-Schlitten (26) angebracht ist.

9. Werkzeugmaschine nach Anspruch 7 oder 8,
**dadurch gekennzeichnet, dass** der Werkstückgreifer (34) an der Trägerplatte (28) zwischen einer Ruhestellung und einer Betriebsstellung schwenkbar gelagert ist, wobei sich der Werkstückgreifer (34) in seine Betriebsstellung axial fluchtend vor der Werkzeugspindel (30) befindet und in seine Ruhestellung aus dem Bereich vor der Werkzeugspindel (30) herausgeschwenkt ist.

10. Werkzeugmaschine nach einem der vorhergehenden Ansprüche,
**dadurch gekennzeichnet, dass** die Werkstücke (62) an Werkstückträgern (64) angebracht sind, die in Aufnahmen (58) einsetzbar sind, welche mit den Aufnahmen (58) für die Werkzeuge (60) übereinstimmen.

11. Werkzeugmaschine nach einem der Ansprüche 1 bis 9,
**dadurch gekennzeichnet, dass** auf das Magazinrad (42) ein Teller (74) aufsetzbar ist, der radiale Rillen (56) als Aufnahmen für axial langgestreckte Werkstücke (78) aufweist.

## Claims

1. Machine tool, with a machine frame (10, 20), with a tool spindle (30) that can be driven to rotate, with a work-piece clamping mechanism (12) and with a magazine, wherein the tool spindle (30) and the work-piece clamping mechanism (12) can be moved in a controlled manner relative to one another on a linear X-axis and wherein the tool spindle (30) can be moved in a controlled manner in relation to the machine frame (10, 20) on linear Y- and Z-axes that are perpendicular to the X-axis and to one another, and can be pivoted in a controlled manner around a C-axis that is parallel to the Z-axis,
**characterised in that**
the magazine has at least one magazine wheel (42, 66) which can be positioned rotating around a rotational axis that is parallel to the Z-axis;
that the magazine wheel (42, 66) has seats (58, 76), arranged distributed in the circumferential direction, for tools (60) and/or work-pieces (62, 64, 78); that the tool spindle (30) has assigned to it a work-piece gripper (34) that can be moved together with the tool spindle (30);
and that the tool spindle (30) can be moved with the work-piece gripper (34) on the Y-, Z- and C-axes to the magazine wheel (42, 66), and can be aligned in relation to the seats (58, 76) such that optionally a tool (60) can be exchanged between the tool spindle (30) and a seat (58) of the magazine wheel (42, 66) or a work-piece (62, 64, 78) can be exchanged between the work-piece gripper (34) and a seat (58, 76) of the magazine wheel (42, 66), wherein a transfer of the work-piece (16, 62, 64, 78) between the work-piece gripper (34) and the work-piece clamping mechanism (12) is effected by the movements in the X-, Y-, Z-and C-axes.

2. Machine tool according to claim 1, **characterised in that** the Z-axis is arranged vertically and the at least one magazine wheel (42, 66) rotates around a vertical rotational axis.

3. Machine tool according to claim 2, **characterised in that** the at least one magazine wheel (42, 66) has a segmented recess (54) which, during the machining procedure, is assigned to the working area of the machine tool.

4. Machine tool according to one of the claims I to 3, **characterised in that** the magazine has an outer magazine wheel (42) and an inner magazine wheel (66) that is arranged coaxially within it, wherein the magazine wheels (42 and 66) can be positioned so as to rotate in a controlled manner independently of one another.

5. Machine tool according to one of the preceding claims, **characterised in that** the tools (60) are received in the at least one magazine wheel (42, 66) with the tool shaft directed radially inwards in relation to the magazine wheel (42, 66) and that the tool spindle (30) plunges into the interior of the at least one magazine wheel (42, 66) and can be moved in the interior of the magazine wheel (42, 66) radially against the seats (58), for a tool change.

6. Machine tool according to one of the preceding claims, **characterised in that** the tool spindle can be moved on the Y- and Z-axes and the work-piece clamping mechanism (12) can be moved on the X-axis.

7. Machine tool according to one of the preceding claims, **characterised in that** the tool spindle (30) and the work-piece gripper (34) are borne on a common carrier plate (28).

8. Machine tool according to claim 7, **characterised in that** the carrier plate (28) is fitted to a Z-carriage (26) that can be moved on the Z-axis and can be rotated around the C-axis.

9. Machine tool according to claim 7 or 8, **characterised in that** the work piece gripper (34) is mounted on the carrier plate (28) so as to pivot between a resting position and an operational position, wherein the work-piece gripper (34) in its operational position is located aligned axially in front of the tool spindle (30), and in its resting position it is pivoted out of the area in front of the tool spindle (30).

10. Machine tool according to one of the preceding claims, **characterised in that** the work-pieces (62) are fitted to work-piece carriers (64) which can be inserted into seats (58) which correspond to the seats (58) for the tools (60).

11. Machine tool according to one of the claims 1 to 9, **characterised in that** a plate (74) can be placed on the magazine wheel (42), this plate having radial grooves (56) as seats for axially elongated work-pieces (78).

## Revendications

1. Machine-outil comportant un bâti (10, 20) équipé d'une broche porte-outil (30) entraînée en rotation, d'une installation de fixation d'outil (12) et d'un magasin,
la broche porte-outil (30) et l'installation de fixation d'outil (12) étant mobiles de manière commandée l'une par rapport à l'autre dans l'axe de translation linéaire X, et
la broche porte-outil (30) est mobile de manière commandée par rapport au bâti (10, 20) suivant l'axe X et par rapport aux axes de coordonnées Y et Z perpendiculaires l'un à l'autre et le porte-outil peut être pivoté de manière commandée autour d'un axe C parallèle à l'axe Z,
**caractérisée en ce que**
le magasin comporte au moins une roue formant magasin (42, 66) qui peut être positionnée en rotation autour d'un axe de rotation parallèle à l'axe Z,
la roue formant magasin (42, 66) comporte des logements (58, 76) répartis dans la direction périphérique pour recevoir des outils (60) et/ou des pièces (62, 64, 78),
la broche porte-outil (30) comporte une pince de pièce (34) mobile en commun avec la broche porte-outil (30), et
la broche porte-outil (30) est mobile avec la pince d'outil (34) par rapport au magasin d'outils (42, 66) suivant les axes Y, Z et C et elle peut être alignée sur les logements (58, 76) pour permettre d'échanger sélectivement un outil (60) entre la broche porte-outil (30) et un logement (58) de la roue formant magasin (42, 66) ou d'échanger une pièce (62, 64, 78) entre la pince de pièce (34) et un logement (58, 76) de la roue formant magasin (42, 66),
l'échange de la pièce (16, 62, 64, 78) entre la pince (34) et l'installation de serrage de pièce (12) se faisant par des mouvements selon les axes X, Y, Z et C.

2. Machine-outil selon la revendication 1,
**caractérisée en ce que**
l'axe Z est vertical et au moins la roue formant magasin (42, 66) tourne autour d'un axe de rotation vertical.

3. Machine-outil selon la revendication 2,
**caractérisée en ce qu'**
au moins la roue formant magasin (42, 66) comporte un segment sans logement (54) associé à l'espace de travail de la machine-outil pour l'opération d'usinage.

4. Machine-outil selon les revendications 1 à 3,
**caractérisée en ce que**
le magasin comporte une roue extérieure (42) formant magasin et une roue intérieure (66) formant magasin, associée coaxialement à celle-ci, les roues formant magasin (42, 66) pouvant être positionnées en rotation de manière commandée, indépendamment l'une de l'autre.

5. Machine-outil selon les revendications précédentes,
**caractérisée en ce que**
les outils (60) d'au moins une roue formant magasin (42, 66) sont logés avec la queue d'outil dirigée radialement vers l'intérieur par rapport à la roue formant magasin (42, 66), et
la broche porte-outil (30) pénètre à l'intérieur d'au moins une roue formant magasin (42, 66), et l'intérieur de la roue formant magasin (42, 66) est mobile radialement par rapport aux logements (58) pour un changement d'outil.

6. Machine-outil selon les revendications précédentes,
**caractérisée en ce que**
la broche porte-outil est mobile suivant l'axe Y' et l'axe Z et l'installation de fixation d'outil (12) est mobile suivant l'axe X.

7. Machine-outil selon les revendications précédentes,
**caractérisée en ce que**
la broche porte-outil (30) et la pince de pièce (34) sont montées sur une plaque de support (28), commune.

8. Machine-outil selon la revendication 7,
**caractérisée en ce que**
la plaque de support (28) est installée sur un chariot Z (26) mobile suivant l'axe Z et rotatif autour de l'axe C.

9. Machine-outil selon la revendication 7 ou 8,
**caractérisée en ce que**
la pince de pièce (34) est montée sur la plaque de support (28) de façon à pouvoir basculer entre une position de repos et une position de fonctionnement,
la pince de pièce (34) est alignée axialement devant la broche porte-outil (30) en position de fonctionnement, alors qu'en position de repos, elle est dégagée par basculement hors de la zone située devant la broche porte-outil (30).

10. Machine-outil selon les revendications précédentes,
**caractérisée en ce que**
les pièces (62) sont installées sur des supports porte-pièce (64) venant dans les logements (58) et qui correspondent aux logements (58) des outils (60).

11. Machine-outil selon les revendications 1 à 9,
**caractérisée en ce qu'**
un plateau (74), ayant des rainures radiales (56) pour recevoir des pièces (78) allongées axialement, est installé sur la roue formant magasin (42).
